# EUROPÄISCHE PATENTSCHRIFT

(11) **EP 0 997 270 B1**
(45) Veröffentlichungstag und Bekanntmachung des Hinweises auf die Patenterteilung: **14.07.2004**
(21) Anmeldenummer: 99117631.4
(22) Anmeldetag: 07.09.1999
(51) Int. Cl.: B32B 31/04, G06K 19/077

(54) **Vorrichtung und Verfahren zum Einfügen eines Sicherungs- und/oder Identifizierungselements zwischen zwei Schichten eines Markierungsstreifens für Gepäckstücke**
Device and method for inserting a security and/or identification element between two layers of a label strip for luggage
Dispositif et procédé pour insérer un élément de sécurité et/ou d'identification entre deux couches d'un ruban d'identification pour bagages

(30) Priorität: 30.10.1998 DE 19850038
(43) Veröffentlichungstag der Anmeldung: 03.05.2000
(73) Patentinhaber: Meto International GmbH, 69434 Hirschhorn/Neckar (DE)
(72) Erfinder: Duschek, Detlef, 64759 Sensbachtal (DE)
(74) Vertreter: Menges, Rolf, Dipl.-Ing.

(56) Entgegenhaltungen:
- DE-A- 4 436 284
- US-A- 5 376 217
- US-A- 5 614 278

## Beschreibung

Die Erfindung betrifft eine Vorrichtung und ein Verfahren zum Einfügen eines Sicherungs- und/oder Identifizierungselements zwischen zwei Schichten eines Markierungsstreifens für Gepäckstücke gemäß Oberbegriff des Anspruches 1 bzw. Anspruches 11.

Markierungsstreifen werden vorzugsweise zur Kennzeichnung von Gepäckstücken an Flughäfen eingesetzt. Auf die Deckschicht der länglichen Markierungsstreifen wird die erforderliche Information aufgedruckt: Passagier, Bestimmungsort, Strichcodes, usw. Anschließend wird die Trägerschicht zumindest in gewissen Bereichen entfernt. Der Markierungsstreifen wird um den Griff des Gepäckstücks geschlungen und in den Bereichen, in denen die Klebstoffschicht freiliegt, mit gegenüberliegenden Bereichen des Markierungsstreifens verklebt.

Eine bevorzugte Ausführungsform eines derartigen Markierungsstreifens ist in der EP 0 568 843 B1 beschrieben. Dieser Markierungsstreifen weist einen Hauptteil und einen sich in Längsrichtung daran anschließenden abteilbaren Kontrollabschnitt auf, wobei der Kontrollabschnitt und ein sich daran anschließender Bereich des Hauptteils auf der Rückseite eine Haftbeschichtung haben, die von einem silikonbeschichteten Deckstreifen abgedeckt ist. Der Deckstreifen weist im Bereich des Hauptteils einen stark haftenden Bereich, auf seiner dem Hauptteil zugewandten Seite, auf. Damit die Befestigung des Deckstreifens am Markierungsstreifen direkt in einem Arbeitsgang beim Zusammenfügen der beiden Teile erfolgen kann, ist die Silikonbeschichtung im stark haftenden Bereich neutralisiert oder von einer Haftschicht überdeckt. Der in dieser europäischen Patentschrift beschriebene Markierungsstreifen ist bestens dazu geeignet, mit dem erfindungsgemäßen Verfahren hergestellt zu werden, da der Deckstreifen in regelmäßigen Abständen unterbrochen ist. Im Bereich der Enden des Deckstreifens besteht jeweils die Möglichkeit, mit dem erfindungsgemäßen Verfahren ein Identifizierungselement zwischen den beiden Streifen zu positionieren.

Es sind jedoch auch andere Markierungsstreifen bekannt, die aus mindestens einer durchgehenden Trägerschicht und mindestens einer durchgehenden Deckschicht bestehen. Alle diese Markierungsstreifen können nach dem erfindungsgemäßen Verfahren mit Identifizierungselementen versehen werden, wenn sich in mindestens einer der vorgenannten Schichten ein Trennschnitt befindet, der orthogonal zur Längsrichtung des Markierungsstreifens verläuft und die betreffende Schicht damit unterbricht, so daß im Bereich des Trennschnitts wieder die Möglichkeit besteht, ein Markierungselement zwischen der unterbrochenen und einer durchgehenden Schicht zu positionieren.

In diesem Zusammenhang ist es nicht von besonderer Bedeutung, ob der Trennschnitt bereits in einer Schicht des Markierungsstreifens vorhanden ist, oder ob an einer geeigneten Stelle der erfindungsgemäßen Vorrichtung selbst eine weitere Vorrichtung vorgesehen ist, welche die betreffende Schicht mit den Trennschnitten versieht.

Die US-A-5 614 278 zeigt den Stand der Technik, von dem die unabhängigen Ansprüche 1 und 11 im Oberbegriff ausgehen. Dieses Dokument beschreibt eine Vorrichtung und ein Verfahren zur Herstellung von streifenförmigen Etiketten, wobei Sicherungselemente mittels einer Spendvorrichtung auf eine Trägerschicht aufgebracht werden, so dass diese schließlich zwischen der Trägerschicht und einer Deckschicht angeordnet sind. Die Vorrichtung wird mittels einer Steuereinheit geregelt. Die mit den Sicherungselementen versehenen Etiketten werden auf eine Speicherrolle aufgezogen.

Der Erfindung liegt die Aufgabe zugrunde, ein geeignetes Verfahren und eine geeignete Vorrichtung zur Herstellung eines kostengünstigen Markierungsstreifens mit integriertem Sicherungs-/Identifizierungselement vorzuschlagen.

Die Aufgabe wird bezüglich der Vorrichtung durch die Merkmale des Anspruches 1 gelöst.

Gemäß einer vorteilhaften Weiterbildung der erfindungsgemäßen Vorrichtung ist der Vorratsrolle, der Vakuumwalze und der Speicherrolle jeweils ein Servomotor zugeordnet. Durch diese Anordnung ist es möglich, die Vorrichtung problemlos an beliebige Abmessungen der Markierungsstreifen und/oder der Sicherungs-/Identifizierungselemente anzupassen. Die Vorrichtung ist folglich universell einsetzbar.

Gemäß einer kostengünstigen Ausgestaltung der erfindungsgemäßen Vorrichtung besteht die Spendvorrichtung aus einer Vorratsrolle, einer Spendkante und einer Speicherrolle. Um die Flexibilität der Vorrichtung zu erhöhen, sind auch hier der Vorratsrolle und der Speicherrolle Servomotoren zugeordnet.

Eine vorteilhafte Ausgestaltung der erfindungsgemäßen Vorrichtung sieht vor, daß die Spendkante in der Nähe des Walzenspalts zwischen Vakuumwalze und Gegendruckwalze angeordnet ist. Weiterhin schlägt eine günstige Ausgestaltung der erfindungsgemäßen Vorrichtung vor, daß zwischen Gegendruckwalze und Speicherwalze ein erster Sensor angeordnet ist, der der Regel-/Steuervorrichtung Information über die jeweilige Position eines Markierungsstreifens liefert. Desweiteren ist ein zweiter Sensor vorgesehen, der der Regel/Steuervorrichtung Information über die Position eines Sicherungs/Identifizierungselements liefert. Bei dem Sicherungs-/Identifizierungselement handelt es sich vorzugsweise um einen integrierten Schaltkreis, dem zwecks Datenaustausch mit einer Abfrageeinheit ein Resonanzschwingkreis zugeordnet ist. Durch das Einfügen eines derartigen Sicherungs-/Identfizierungselements verfügt die Abfrageeinheit stets über die notwendige Information hinsichtlich des Gepäckstücks, an dem das Sicherungs-/Identifizierungselement befestigt ist. Weiterhin ist es nicht mehr, wie etwa im Falle des Auslesens von Strichcodes, notwendig, daß die Informationsquelle in unmittelbarer Nachbarschaft der Abfrageeinheit vorbeigeführt werden muß.

Damit der Trennschnitt, an der die Trägerschicht von der Deckschicht zwecks Einfügens des Sicherungs-/Identifizierungselements abgehoben wird, für die Regel-/Steuervorrichtung gut erkennbar ist, ist auf dem Markierungsstreifen eine Kennzeichnung angebracht, die von dem Sensor eindeutig detektiert wird. Bei dieser Kennzeichnung handelt es sich beispielsweise um einen breiten Querstrich, der von einem optischen Kontrastsensor problemlos erkennbar ist. Beliebige andere Kennzeichnungen können im Zusammenhang mit der Erfindung zum Einsatz kommen, solange sie nur für den jeweils verwendeten Sensor eindeutig identifizierbar sind. In der Regel werden geeignete Markierungen ohnehin für die Bedruckung handelsüblicher Markierungsstreifen aufgebracht, so daß keine zusätzlichen Kennzeichnungen notwendig werden.

Eine bevorzugte Ausgestaltung der erfindungsgemäßen Vorrichtung sieht vor, daß der Sensor zwischen dem Walzenspalt und der Speicherrolle angeordnet ist, wobei sein Abstand zum Walzenspalt so bemessen ist, daß er dem Abstand entspricht, den die Kennzeichnung von dem Trennschnitt in der Trägerschicht eines Markierungsstreifens hat und daß die Vakuumwalze eingeschaltet wird, sobald der Sensor eine Kennzeichnung erkennt und ein entsprechendes Signal an die Regel-/Steuervorrichtung weiterleitet. Bei dieser bevorzugten Ausführungsform der erfindungsgemäßen Vorrichtung ist also die Registrierung der Kennzeichnung durch den Sensor direkt mit der Aktivierung der Vakuumwalze gekoppelt.

Die Erfindung wird hinsichtlich des Verfahrens durch die Merkmale des Anspruches 1 gelöst,

Gemäß einer bevorzugten Ausgestaltung des erfindungsgemäßen Verfahrens werden die Zeitpunkte der Umkehr der Laufrichtung des Markierungsstreifens und des Ein- und Ausschaltens der Vakuumquelle über eine Regel-/Steuervorrichtung und Servomotoren bestimmt. Diese Ausgestaltung hat gegenüber einer rein hardwaremäßigen Lösung den Vorteil, daß das erfindungsgemäße Verfahren und die erfindungsgemäße Vorrichtung ohne große Probleme so modifiziert werden können, daß beliebig dimensionierte Markierungsstreifen und Sicherungs-/Identifizierungselemente bearbeitet werden können. Wie bereits erwähnt, sieht eine vorteilhafte Weiterbildung des erfindungsgemäßen Verfahrens vor, daß die Position der Markierungsstreifen und/oder die Position der Sicherungs-/ Identifizierungselemente mittels Sensoren bestimmt werden/wird.

Gemäß einer bevorzugten Ausgestaltung des erfindungsgemäßen Verfahrens sind die Sicherungs-/Identifizierungselemente auf ein Trägerband aufgeklebt, wobei die Adhäsion des Klebers zu den Sicherungs-/Identifizierungselementen größer ist als zu dem Trägerband; die Sicherungs-/Identifizierungselemente werden an der Spendkante der Spendvorrichtung von dem Trägerband abgehoben und mit der nicht mit Kleber beschichteten Seite auf die mit Kleber beschichtete Deckschicht aufgebracht. Hierdurch wird auf einfache Weise erreicht, daß nach Zusammenfügen der Trägerschicht mit der Deckschicht die Haftkraft im Bereich eines eingefügten Sicherungs-/Identifizierungselements dieselbe ist wie außerhalb dieses Bereichs.

Die Erfindung wird anhand der nachfolgenden Figuren näher erläutert. Es zeigt:
Fig. 1: eine Explosionsdarstellung eines Markierungsstreifens,
Fig. 2: eine Seitenansicht einer vorteilhaften Ausgestaltung der erfindungsgemäßen Vorrichtung und
Fig. 3: ein Flußdiagramm zur Ansteuerung der Regel-/Steuervorrichtung zur Durchführung einer vorteilhaften Ausgestaltung des erfindungsgemäßen Verfahrens.

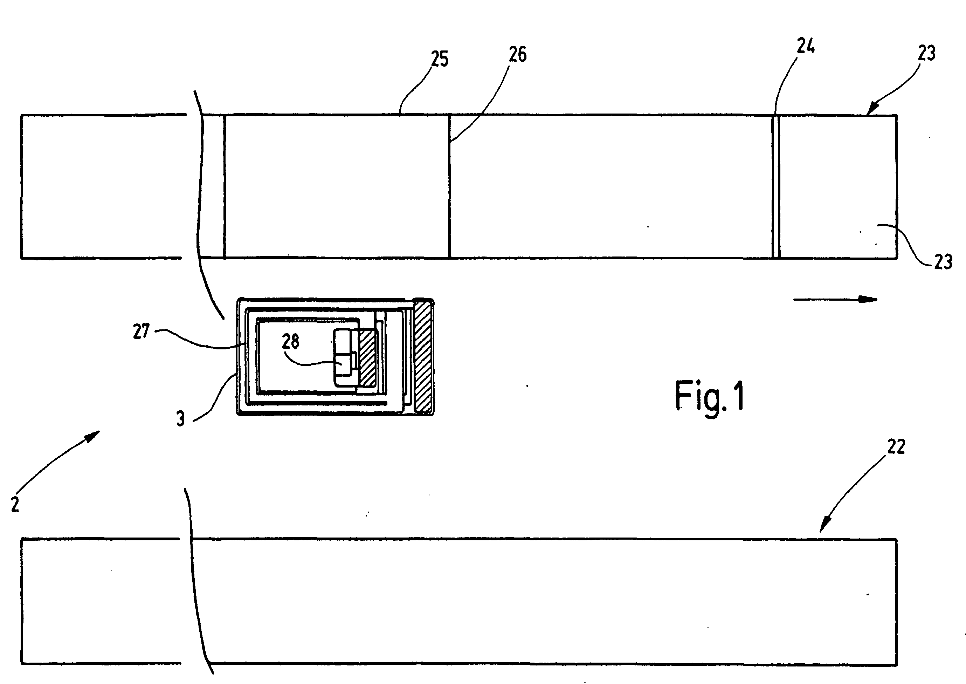

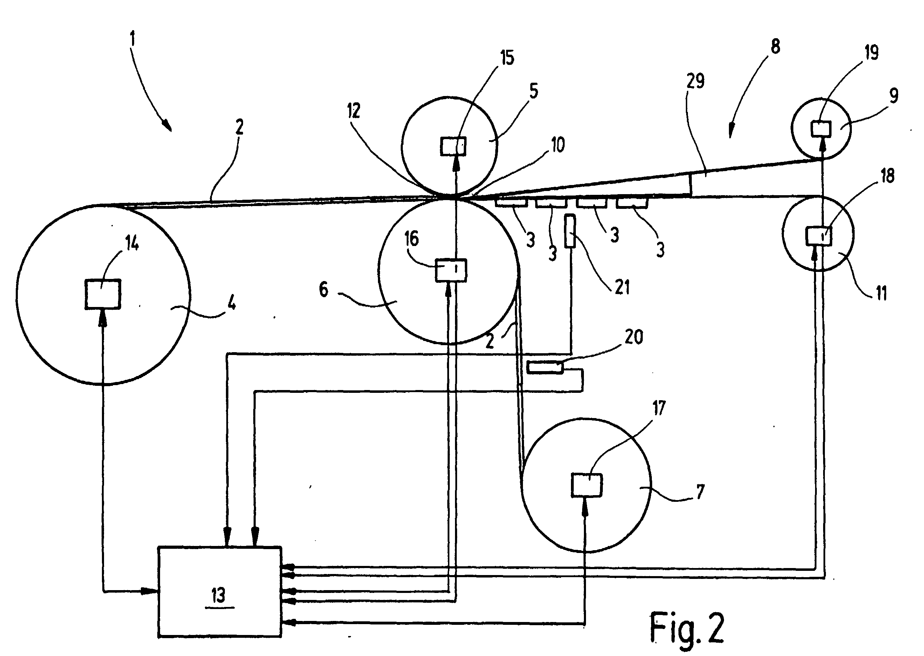

Fig. 1 zeigt eine Explosionsdarstellung eines Markierungsstreifens 2. Der Markierungsstreifen 2 besteht aus einer Trägerschicht 23, einem Sicherungs-/Identifizierungselement 3, das in einen vorgegebenen Bereich 25 des Markierungsstreifens 2 geklebt wird, und einer Deckschicht 22. Auf der Außenseite der Trägerschicht 23 ist eine Kennzeichnung 24 angebracht. Im vorliegenden Fall handelt es sich um einen dunklen Streifen, der quer zur Laufrichtung der Markierungselemente in der erfindungsgemäßen Vorrichtung aufgebracht ist. Desweiteren weist die Trägerschicht 23 einen Trennschnitt 26 auf, dessen Funktion im Zusammenhang mit Fig. 2 noch näher erläutert wird. Dieser Trennschnitt kann allerdings auch mit der Kennzeichnung 24 oder dem Ende des Streifens zusammenfallen. Darüber hinaus besteht die Möglichkeit, die Deckschicht mit dem Trennschnitt zu versehen und die Trägerschicht durchgängig zu lassen.

Das Sicherungs-/Identifizierungselement 3 besteht im Falle der dargestellten Ausgestaltung des Markierungsstreifens 2 aus einem Resonanzschwingkreis 27, der elektrisch mit einem integrierten Schaltkreis 28 verbunden ist. Der Markierungsstreifen 2 ist in Längsrichtung so dimensioniert, daß er problemlos um den Griff eines Gepäckstücks geschlungen und in dieser Position fixiert werden kann.

In Fig. 2 ist eine Seitenansicht einer vorteilhaften Ausgestaltung der erfindungsgemäßen Vorrichtung 1 dargestellt. Die Markierungsstreifen 2 liegen als Bandmaterial vor und sind auf einer Vorratsrolle 4 aufgewickelt. Das Bandmaterial mit den Markierungsstreifen 2 wird durch einen Walzenspalt 12 geführt, der zwischen einer Gegendruckwalze 6 und einer an die Gegendruckwalze 6 angestellte Vakuumwalze 5 gebildet wird. Das Bandmaterial mit den Markierungsstreifen 2 wird auf eine Speicherrolle 7 aufgewickelt, nachdem ein Sicherungs-/Identifizierungselement 3 in den vorbestimmten Bereich 25 eines jeden Markierungsstreifens 2 eingefügt worden ist.

In unmittelbarer Nähe des Walzenspalts 12 ist eine Spendkante 10 einer Spendvorrichtung 8 für die Sicherungs-/Identifizierungselemente 3 vorgesehen. Die Sicherungs-/Identifizierungselemente 3 sind auf einem Trägerband 29 angeordnet. Das Trägerband 29 wird von der Vorratsrolle 11 abgewickelt, über die Spendkante 10 zu einer Speicherrolle 9 geführt und dort wieder aufgewickelt. An der Spendkante 10 werden die Sicherungs-/Identifizierungselemente 3 stets so von dem Trägerband 29 abgenommen und auf die Deckschicht 22 der Markierungsstreifen 2 gespendet, daß jedes Sicherungs-/Identifizierungselement 3 in dem vor gegebenen Bereich 25 positioniert wird.

Damit die Sicherungs-/Identifizierungselemente 3 korrekt in den vorgegebenen Bereichen 25 der Markierungselemente 2 appliziert werden, ist eine Regel-/Steuervorrichtung 13 vorgesehen. Diese erhält von Sensoren 20, 21 die notwendige Information über die Position der Markierungsstreifen 2 und der Sicherungs-/Identifizierungselemente 3 und steuert über Servomotoren 14, 15, 16, 17, 18, 19 deren Laufrichtung und/oder Laufgeschwindigkeit. Die Servomotoren 14, 15, 16, 17, 18, 19 haben vorzugsweise integrierte Winkelgeber und sind den Walzen/Rollen 4, 5, 6, 7, 9, 11 zugeordnet.

Eine alternative Ausgestaltung sieht vor, daß von den beiden Walzen nur der Vakuumwalze 5 oder nur der Gegendruckwalze 6 jeweils ein Servomotor 15 oder 16 zugeordnet ist. In diesem Fall wird Drehmoment von der mit einem Servomotor aktiv angetriebenen Walze mit einfachen mechanischen Mitteln wie mit ineinandergreifenden Zahnrädern oder lediglich über die in dem Walzenspalt 12 entstehende Reibung auf die andere Walze übertragen. Der ökonomische Vorteil dieser Ausführungsform liegt angesichts der Kosten des eingesparten Servomotors 15 oder 16 sowie des Aufwandes zur Steuerung oder Regelung sowie der Strom versorgung desselben auf der Hand.

Bei der in Fig. 2 gezeigten Ausführungsform der erfindungsgemäßen Vorrichtung ist der Abstand des Sensors 20 von dem Walzenspalt 12 - in Laufrichtung der Markierungsstreifen 2 gesehen - gleich dem Abstand der Kennzeichnung 24 von dem Trennschnitt 26. In dem Zeitpunkt, in dem der Sensor 20 die Kennzeichnung 24 detektiert, befindet sich der Trennschnitt 26 in der Trägerschicht 23 im Walzenspalt 12 zwischen Vakuumwalze 5 und Gegendruckwalze 6. Der Sensor 20 sendet der Regel-/Steuervorrichtung 13 über die Verbindungsleitung das Erkennungssignal zu. Daraufhin aktiviert die Regel-/Steuervorrichtung 13 die Vakuumwalze. Infolge des auf der Oberfläche der Vakuumwalze 5 herrschenden Unterdrucks wird die Trägerschicht 23 - in Laufrichtung gesehen - hinter dem Trennschnitt 26 abgehoben und auf dem Umfang der Vakuumwalze 5 fixiert. In dem Moment, in dem der für die Plazierung des Identifikationselements vorbestimmte Bereich erreicht ist, aktiviert die Regel-/Steuervorrichtung 13 die Spendvorrichtung 8, die daraufhin an der vorbestimmten Stelle des Markierungsstreifens 2 ein Sicherungs-/Identifizierungselement 3 auf die mit Kleber beschichtete Seite der Deckschicht 22 spendet. Damit dieser Spendvorgang korrekt erfolgen kann, wird die Position des Sicherungs-/Identifizierungselements 3 von dem Sensor 21 überwacht. Sobald der Spendvorgang beginnt, ändert die Regel-/Steuervorrichtung 13 die Drehrichtung der Walzen/Rollen 4, 5, 6, 7, wodurch sich die Laufrichtung der Markierungsstreifen 2 ändert und die Trägerschicht 23 wieder mit der Deckschicht 22 zusammenlaminiert wird.

Sobald ein Sicherungs-/Identifizierungselement 3 vollständig gespendet ist, stoppt die Regel-/Steuervorrichtung 13 die Rollen 9, 11 der Spendvorrichtung 8. Die Vakuumwalze 5 wird spätestens zu dem Zeitpunkt deaktiviert, wenn die Rollen/Walzen 4, 5, 6, 7 wieder in die ursprüngliche Laufrichtung gedreht werden. Diese erneute Änderung der Laufrichtung erfolgt - wie bereits an vorhergehender Stelle erwähnt -, sobald die Trägerschicht 23 und die Deckschicht 22 eines Markierungsstreifens 2 zusammenlaminiert sind und das Sicherungs-/Identifizierungselement 3 in dem vorgegebenen Bereich 25 in den Markierungsstreifen 2 integriert ist. Sobald der Sensor 20 die nachfolgende Kennzeichnung 24 detektiert, wiederholt sich der Vorgang.

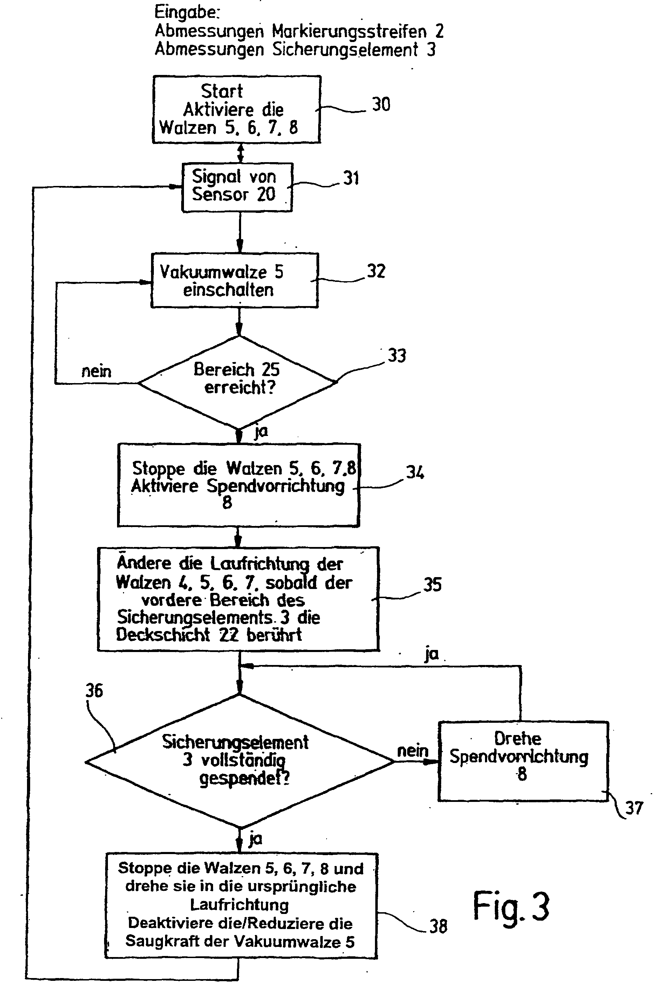

Fig. 3 zeigt ein Flußdiagramm zur Ansteuerung der Regel-/Steuervorrichtung 13 zur Durchführung einer vorteilhaften Ausgestaltung des erfindungsgemäßen Verfahrens. Als Vorrichtung wird die in Fig. 2 gezeigte Ausführungsform benutzt.

Damit die Regel-/Steuervorrichtung 13 das Verfahren ordnungsgemäß durchführten kann, benötigt sie Information über die Abmessungen der Markierungsstreifen 2 und der Sicherungs-/Identifizierungselemente 3. Bei einem Programmpunkt 30 wird das Programm gestartet. Sobald der Sensor 20 ein Signal an die Regel-/Steuervorrichtung 13 sendet, daß er eine Kennzeichnung 24 detektiert hat (Programmpunkt 31), veranlaßt die Regel-/Steuervorrichtung 13 bei einem Programmpunkt 32 die Aktivierung der Vakuumwalze 5. Unter Programmpunkt 33 wird überprüft, ob der Bereich 25 des Markierungselements 2, in dem das Sicherungs-/Identifzierungselement 3 plaziert werden soll, bereits erreicht ist. Sobald der Bereich 25 erreicht ist (Programmpunkt 34), wird die Spendvorrichtung 8 aktiviert - mit der Folge, daß das Sicherungs-/Identifizierungselement 3 in den vorbestimmten Bereich 25 plaziert wird.

Die Vorwärtsbewegung des Markierungsstreifens 2 wird gestoppt, sobald der vordere (= in Laufrichtung der Spendvorrichtung 8) Bereich des Sicherungs-/Identifizierungselements 3 auf die Deckschicht 22 gespendet worden ist (Programmpunkt 35). Dann veranlaßt die Regel-/Steuervorrichtung 13 unter Punkt 35, daß die Walzen/Rollen 4, 5, 6, 7 in die gegensinnige Laufrichtung gedreht werden - mit der Folge, daß das Sicherungs-/Identifizierungselement 3 vollständig auf der Deckschicht plaziert werden kann. Die Spendvorrichtung 8 wird deaktiviert, sobald das Sicherungs-/Identifizierungselement 3 vollständig auf die Deckschicht 22 gespendet worden ist (Programmpunkte 36, 37). Bei 38 werden die Walzen/Rollen 4, 5, 6, 7, wieder in die ursprüngliche Richtung gedreht, und die Vakuumwalze 5 wird deaktiviert bzw. ihre Saugkraft reduziert - mit der Folge, daß die Trägerschicht 23 nicht mehr an der Vakuumwalze 5 anhaftet und spätestens in dem Walzenspalt wieder mit der Deckschicht 22 zusammenlaminiert wird.

Der Vorgang wiederholt sich zyklisch, sobald die nachfolgende Kennzeichnung 24 in das Sichtfeld des Sensors 20 kommt. (Die erste gehört zu dem Markierungsstreifen 2, in den zuvor bereits ein Sicherungs-/Identifizierungselement 3 integriert worden ist)

### Bezugszeichenliste

- 1: erfindungsgemäße Vorrichtung
- 2: Markierungsstreifen
- 3: Sicherungs-/Identifizierungselement
- 4: Vorratsrolle (Markierungsstreifen)
- 5: Vakuumwalze
- 6: Gegendruckwalze
- 7: Speicherrolle (Markierungsstreifen)
- 8: Spendvorrichtung
- 9: Speicherrolle (Trägerband der Sicherungs-/Identifizierungselemente)
- 10: Spendkante (Sicherungs-/Identifizierungselemente)
- 11: Vorratsrolle (Sicherungs-/Identifizierungselemente)
- 12: Walzenspalt
- 13: Regel-/Steuervorrichtung
- 14: Servomotor (Vorratsrolle)
- 15: Servomotor
- 16: Servomotor
- 17: Servomotor
- 18: Servomotor
- 19: Servomotor
- 20: Sensor
- 21: Sensor
- 22: Deckschicht
- 23: Trägerschicht
- 24: Kennzeichnung
- 25: vorgegebener Bereich
- 26: Trennschnitt
- 27: Resonanzschwingkreis
- 28: integrierter Schaltkreis
- 29: Trägerband (Sicherungs-/Identifizierungselemente)
- 30-38: Programmpunkte

## Patentansprüche

1. Vorrichtung (1) zum Einfügen eines Sicherungs- und/oder Identifizierungselements (3) zwischen zwei Schichten eines Markierungsstreifens (2) für Gepäckstücke, wobei es sich bei den beiden Schichten um eine Deckschicht (22) und eine Trägerschicht (23) handelt, die zumindest in Teilbereichen über eine Klebeschicht miteinander verbunden sind, und wobei die Klebeschicht bei Ablösen der Trägerschicht (23) an der Deckschicht (22) haftet, mit einer Spendvorrichtung (8) für die Sicherungs- und/oder Identifizierungselemente (3), einer Regel-/Steuervorrichtung (13) und einer Speicherrolle (7), auf die die Markierungsstreifen (2) mit den eingefügten Sicherungs-/Identifizierungselementen (3) aufgewickelt werden,
**dadurch gekennzeichnet,**
**daß** eine Vorratsrolle (4) mit Markierungsstreifen (2) in Bandform vorgesehen ist, daß ein Walzenpaar (5, 6), bestehend aus einer Vakuumwalze (5) und einer Gegendruckwalze (6), vorgesehen ist, wobei die Markierungsstreifen (2) durch den Walzenspalt (12) zwischen Vakuumwalze (5) und Gegendruckwalze (6) geführt werden, und
**daß** die Regel-/Steuervorrichtung (13) die Vorrichtung (1) derart steuert, daß ein Sicherungs-/Identifizierungselement (3) zwischen der Deckschicht (22) und der Trägerschicht (23) des Markierungsstreifens (2) plaziert wird.

2. Vorrichtung nach Anspruch 1,
**dadurch gekennzeichnet,**
**daß** der Vorratsrolle (4) und der Speicherrolle (7) sowie der Vakuumwalze (5) oder der Gegendruckwalze (6) jeweils ein Servomotor (14, 17 sowie 15 oder 16) zugeordnet ist, wobei von der durch einen Servomotor angetriebenen Walze mit mechanischen Mitteln - wie beispielsweise Zahnrädern - Drehmoment auf die nicht direkt von einem Servomotor angetriebene Walze übertragen wird.

3. Vorrichtung nach Anspruch 1,
**dadurch gekennzeichnet,**
**daß** der Vorratsrolle (4), der Speicherrolle, der Vakuumwalze (5) und der Gegendruckwalze (6) jeweils ein Servomotor (14, 15, 16 und 17) zugeordnet ist.

4. Vorrichtung nach Anspruch 1, 2 oder 3,
**dadurch gekennzeichnet,**
**daß** die Spendvorrichtung (8) aus einer weiteren Vorratsrolle (11), einer Spendkante (10) und einer weiteren Speicherrolle (9) besteht.

5. Vorrichtung nach Anspruch 1 oder 4,
**dadurch gekennzeichnet,**
**daß** die Spendkante (10) in der Nähe des Walzenspalts (12) zwischen Vakuumwalze (5) und Gegendruckwalze (6) angeordnet ist.

6. Vorrichtung nach Anspruch 4,
**dadurch gekennzeichnet,**
**daß** der weiteren Vorratsrolle (11) und der weiteren Speicherrolle (9) der Spendvorrichtung (8) jeweils ein Servomotor (18, 19) zugeordnet ist.

7. Vorrichtung nach Anspruch 1, 2 oder 3,
**dadurch gekennzeichnet,**
**daß** zwischen Gegendruckwalze (6) und Speicherrolle (7) ein erster Sensor (20) angeordnet ist, der der Regel-/Steuervorrichtung (13) Information über die Position eines Markierungsstreifens (2) liefert.

8. Vorrichtung nach Anspruch 6,
**dadurch gekennzeichnet,**
**daß** ein zweiter Sensor (21) vorgesehen ist, der der Regel-/Steuervorrichtung (13) Information über die Position eines Sicherungs-/Identifizierungselements (3) liefert.

9. Vorrichtung nach Anspruch 7,
**dadurch gekennzeichnet,**
**daß** auf dem Markierungsstreifen (2) eine Kennzeichnung (24) angebracht ist, die von dem ersten Sensor (20) erkannt wird.

10. Vorrichtung nach Anspruch 9,
**dadurch gekennzeichnet,**
**daß** der erste Sensor (20) zwischen dem Walzenspalt (12) und der Speicherrolle (7) angeordnet ist, wobei sein Abstand zum Walzenspalt (12) so bemessen ist, daß er dem Abstand entspricht, den die Kennzeichnung (24) von einem Trennschnitt (26) in der Trägerschicht (23) eines Markierungsstreifens (2) hat, hinter dem das Sicherungs-/Identifizierungselement (3) plaziert wird, und daß die Vakuumwalze (5) eingeschaltet wird, sobald der erste Sensor (20) eine Kennzeichnung (24) erkennt und ein entsprechendes Signal an die Regel-/Steuervorrichtung (13) weiterleitet.

11. Verfahren zum Einfügen eines Sicherungs- und/oder Identifizierungselements (3) zwischen zwei Schichten eines Markierungsstreifens (2) für Gepäckstücke, wobei es sich bei den beiden Schichten um eine Deckschicht (22) und eine Trägerschicht (23) handelt, die zumindest in Teilbereichen über eine Klebeschicht miteinander verbunden sind, wobei die Klebeschicht bei Ablösen der Trägerschicht (23) an der Deckschicht (22) haftet, und wobei ein Sicherungs-/Identifizierungselement (3) auf die Deckschicht (22) oder die Trägerschicht (23) gespendet wird,
**dadurch gekennzeichnet,**
**daß** die Markierungsstreifen (2) in Bandform vorliegen und in Laufrichtung an einer Vakuumquelle vorbeigeführt werden,
**daß** die Vakuumquelle eingeschaltet wird, sobald ein Trennschnitt (26) eines vorgegebenen Bereichs (25) eines Markierungsstreifens (2) in den Einflußbereich der Vakuumquelle kommt, wodurch diejenige Schicht des Markierungsstreifens (2), die von dem Trennschnitt (26) unterbrochen ist, von der jeweils anderen Schicht dieses Markierungsstreifens (2) abgehoben wird, und
**daß** die Laufrichtung des Markierungsstreifens (2) umgekehrt wird, sobald der vordere Bereich des gespendaten Sicherungs-/Identifizierungselements (3) auf der Deckschicht (22) oder der Trägerschicht (23) haftet, wodurch die Deckschicht (22) und die Trägerschicht (23) eines Markierungsstreifens (2) wieder zusammengeführt werden und das Sicherungs-/Identifizierungselement (2) zwischen den beiden Schichten (22, 23) eingefügt wird.

12. Verfahren nach Anspruch 11,
**dadurch gekennzeichnet,**
**daß** die Zeitpunkte der Umkehr der Laufrichtung der Markierungsstreifen (2) und der Ein- und Ausschaltung der Vakuumquelle (5) über eine Regel-/Steuervorrichtung (13) und Servomotoren bestimmt werden.

13. Verfahren nach Anspruch 11 oder 12,
**dadurch gekennzeichnet,**
**daß** die Position der Markierungsstreifen (2) und/oder die Position der Sicherungs-/ Identifizierungselemente (3) mittels Sensoren (20, 21) bestimmt wird.

14. Verfahren nach Anspruch 12,
**dadurch gekennzeichnet,**
**daß** die Sicherungs-/Identifizierungselemente (3) auf ein Trägerband (29) aufgeklebt sind, wobei die Adhäsion des Klebers zu den Sicherungs-/Identifizierungselementen (3) größer ist als zu dem Trägerband (29),
**daß** die Sicherungs-/Identifizierungselemente (3) an der Spendkante (10) der Spendvorrichtung (8) von dem Trägerband (29) abgehoben werden und
**daß** die Sicherungs-/Identifizierungselemente (3) mit der nicht mit Kleber beschichteten Seite auf die mit Kleber beschichtete Deckschicht (22) aufgebracht werden.

## Claims

1. A device (1) for inserting a security and/or identification element (3) between two layers of a marking strip (2) for items of baggage, said two layers being an overlayer (22) and a substrate (23) joined together at least in sub-sections by way of an adhesive layer, said adhesive layer adhering to the overlayer (22) when the substrate (23) is removed, said device comprising a dispensing device (8) for the security and/or identification elements (3), a control device (13), and a take-up reel (7) onto which the marking strips (2) with the inserted security/identification elements (3) are wound,
**characterized in that** a supply reel (4) with marking strips (2) in web form is provided, that a roll pair (5, 6) consisting of a vacuum roll (5) and a platen roll (6) is provided, said marking strips (2) being guided through the roll gap (12) between the vacuum roll (5) and the platen roll (6), and
that the control device (13) controls the device (1) so that one security/identification element (3) is placed between the overlayer (22) and the substrate (23) of the marking strip (2).

2. The device as claimed in claim 1,
**characterized in that** one servo motor (14, 17 as well as 15 or 16) each is operatively associated with the supply reel (4) and the take-up reel (7) as well as the vacuum roll'(5) or the platen roll (6), torque being transmitted to the roll not directly driven by a servo motor from the roll driven by a servo motor using mechanical means, as, for example, gears.

3. The device as claimed in claim 1;
**characterized in that** one servo motor (14, 15, 16 and 17) each is operatively associated with the supply reel (4), the take-up reel, the vacuum roll (5) and the platen roll (6).

4. The device as claimed in claim 1, 2 or 3,
**characterized in that** the dispensing device (8) is comprised of an additional supply reel (11), a dispensing edge (10) and an additional take-up reel (9).

5. The device as claimed in claim 1 or 4,
**characterized in that** the dispensing edge (10) is positioned in the vicinity of the roll gap (12) between the vacuum roll (5) and the platen roll (6).

6. The device as claimed in claim 4,
**characterized in that** a servo motor (18, 19) is operatively associated with the additional supply reel (11) and the additional take-up reel (9), respectively, of the dispensing device (8).

7. The device as claimed in claim 1, 2 or 3,
**characterized in that** a first sensor (20) is positioned between the platen roll (6) and the take-up reel (7), said sensor supplying the control device (13) with information about the position of a marking strip (2).

8. The device as claimed in claim 6,
**characterized in that** a second sensor (21) is provided, which supplies the control device (13) with information about the position of a security/identification element (3).

9. The device as claimed in claim 7,
**characterized in that** a marker (24) designed to be detected by the first sensor (20) is applied to the marking strip (2).

10. The device as claimed in claim 9,
**characterized in that** the first sensor (20) is positioned between the roll gap (12) and the take-up reel (7), the sensor's distance to the roll gap (12) being made to equal the distance of the marker (24) to a severing cut (26) in the substrate (23) of a marking strip (2) behind which the security/identification element (3) is placed, and that the vacuum roll (5) is switched on once the first sensor (20) detects a marker (24) and relays a corresponding signal to the control device (13).

11. A method for inserting a security and/or identification element (3) between two layers of a marking strip (2) for items of baggage, said two layers being an overlayer (22) and a substrate (23) joined together at least in sub-sections by way of an adhesive layer, with said adhesive layer adhering to the overlayer (22) when the substrate (23) is removed, and with a security/identification element (3) being dispensed onto the overlayer (22) or the substrate (23),
**characterized in that** the marking strips (2) are available in web form and are guided in running direction past a vacuum source,
that the vacuum source is switched on as soon as a severing cut (26) of a predetermined section (25) of a marking strip (2) enters the range of action of the vacuum source, whereby that layer of the marking strip (2) that is interrupted by the severing cut (26) is lifted from the respective other layer of this particular marking strip (2), and
that the running direction of the marking strip (2) is reversed as soon as the leading section of the dispensed security/identification element (3) adheres to the overlayer (22) or the substrate (23), whereby the overlayer (22) and the substrate (23) of a marking strip (2) are brought together again and the security/identification element (2) is inserted between the two layers (22, 23).

12. The method as claimed in claim 11,
**characterized in that** the instants of time when the running direction of the marking strips (2) is reversed and the vacuum source (5) is switched on and off are fixed by way of a control device (13) and servo motors.

13. The method as claimed in claim 11 or 12,
**characterized in that** the position of the marking strips (2) and/or the position of the security/identification elements (3) is determined by means of sensors (20, 21).

14. The method as claimed in claim 12,
**characterized in that** the security/identification elements (3) are affixed to a supporting web (29) by means of an adhesive whose adhesion to the security/identification elements (3) is greater than to the supporting web (29), that the security/identification elements (3) are lifted off the supporting web (29) at the dispensing edge (10) of the dispensing device (8), and that the security/identification elements (3) are applied with their non-adhesive-coated side to the overlayer (22) coated with adhesive.

## Revendications

1. Dispositif (1) permettant d'introduire un élément de protection et / ou d'identification (3) entre deux couches d'une bande de repérage (2) pour des bagages, dans lequel les deux couches sont une couche de couverture (22) et une couche de support (23), qui sont reliées l'une à l'autre au moins dans des zones partielles par l'intermédiaire d'une couche adhésive, et dans lequel la couche adhésive adhère à la couche de couverture (22) quand on détache la couche de support (23), avec un dispositif d'application (8) pour les éléments de protection et / ou d'identification (3), un dispositif de réglage / commande (13) et un rouleau de stockage (7), sur lequel sont enroulées les bandes de repérage (2) avec les éléments de protection / d'identification (3) introduits,
**caractérisé en ce qu'**il est prévu un rouleau de réserve (4) avec des bandes de repérage (2) sous la forme de ruban, **en ce qu'**il est prévu une paire de cylindres (5, 6) comprenant un cylindre à vide (5) et un cylindre de contre-pression (6), les bandes de repérage (2) étant acheminées par l'intermédiaire de l'espace séparant les cylindres (12) entre le cylindre à vide (5) et le cylindre de contre-pression (6), et **en ce que** le dispositif de réglage / commande (13) commande le dispositif (1) de telle sorte qu'un élément de protection / d'identification (3) est placé entre la couche de couverture (22) et la couche de support (23) de la bande de repérage (2).

2. Dispositif selon la revendication 1, **caractérisé en ce qu'**un servomoteur (14, 17 et 15 ou 16) est respectivement affecté au rouleau de réserve (4) et au rouleau de stockage (7) ainsi qu'au cylindre à vide (5) ou au cylindre de contre-pression (6), en sorte que le moment de rotation généré par le cylindre entraîné par l'intermédiaire d'un servomoteur avec des moyens mécaniques - par exemple des roues dentées - est transmis au cylindre qui n'est pas entraîné directement par un servomoteur.

3. Dispositif selon la revendication 1, **caractérisé en ce qu'**un servomoteur (14, 15, 16 et 17) est respectivement affecté au rouleau de réserve (4), au rouleau de stockage (7), au cylindre à vide (5) et au cylindre de contre-pression (6).

4. Dispositif selon l'une quelconque des revendications 1, 2 ou 3, **caractérisé en ce que** le dispositif d'application (8) est constitué d'un autre rouleau de réserve (11), d'un bord d'application (10) et d'un autre rouleau de stockage (9).

5. Dispositif selon la revendication 1 ou 4, **caractérisé en ce que** le bord d'application (10) est disposé à proximité de l'espace séparant les cylindres (12) entre le cylindre à vide (5) et le cylindre de contre-pression (6).

6. Dispositif selon la revendication 4, **caractérisé en ce qu'**un servomoteur (18, 19) est respectivement affecté à l'autre rouleau de réserve (11) et à l'autre rouleau de stockage (9) du dispositif d'application (8).

7. Dispositif selon l'une quelconque des revendications 1, 2 ou 3, **caractérisé en ce que**, entre le cylindre de contre-pression (6) et le rouleau de stockage (7) est disposé un premier capteur (20), qui donne des informations sur la position d'une bande de repérage (2) au dispositif de réglage / commande (13).

8. Dispositif selon la revendication 6, **caractérisé en ce qu'**on prévoit un deuxième capteur (21), qui donne des informations sur la position de l'élément de protection et / ou d'identification (3) au dispositif de réglage / de commande (13).

9. Dispositif selon la revendication 7, **caractérisé en ce que**, sur la bande de repérage (2), on applique une marque distinctive (24) qui est reconnue par le premier capteur (20).

10. Dispositif selon la revendication 9, **caractérisé en ce que** le premier capteur (20) est disposé entre l'espace séparant les cylindres (12) et le rouleau de stockage (7), moyennant quoi sa distance par rapport à l'espace séparant les cylindres (12) est mesurée de telle sorte qu'elle correspond à la distance existant entre la marque distinctive (24) et une couche de séparation (26) dans la couche de support (23) d'une bande de repérage (2), derrière laquelle est placé l'élément de protection / d'identification (3), et **en ce que** le cylindre à vide (5) est mis en service dès que le premier capteur (20) a reconnu une marque distinctive (24) et transmet un signal correspondant au dispositif de réglage / commande (13).

11. Procédé permettant d'introduire un élément de protection et / ou d'identification (3) entre deux couches d'une bande de repérage (2) pour des bagages, dans lequel les deux couches sont une couche de couverture (22) et une couche de support (23) qui sont reliées l'une à l'autre au moins dans des zones partielles par l'intermédiaire d'une couche adhésive, dans lequel la couche adhésive adhère à la couche de couverture (22) quand on détache la couche de support (23), et dans lequel un élément de protection / d'identification (3) est appliqué sur la couche de couverture (22) ou sur la couche de support (23),
**caractérisé en ce que** les bandes de repérage (2) se présentent sous la forme de rubans et sont acheminées au niveau d'une source de vide dans le sens d'avance, **en ce que** la source de vide est mise en service dès qu'une couche de séparation (26) d'une zone prédéfinie (25) d'une bande de repérage (2) arrive dans la zone d'action de la source de vide, sachant que la couche de la bande de repérage (2) qui est retirée de la couche de séparation (26) est soulevée de l'autre couche respective de cette bande de repérage (2), et **en ce que** le sens de l'avance de la bande de repérage (2) est inversé dès que la zone avant de l'élément de protection et / ou d'identification (3) appliqué adhère à la couche de couverture (22) ou à la couche de support (23), sachant que la couche de couverture (22) et la couche de support (23) d'une bande de repérage (2) sont de nouveau acheminées ensemble et l'élément de protection et / ou d'identification (2) est introduit entre les deux couches (22, 23).

12. Procédé selon la revendication 11, **caractérisé en ce que** les moments d'inversement du sens de l'avance des bandes de repérage (2) et la mise en service et hors service de la source de vide (5) est déterminée par l'intermédiaire d'un dispositif de réglage et / ou de commande (13) et de servomoteurs.

13. Dispositif selon la revendication 11 ou 12, **caractérisé en ce que** la position des bandes de repérage (2) et / ou la position des éléments de protection / d'identification (3) est déterminée à l'aide de capteurs (20, 21).

14. Procédé selon la revendication 12, **caractérisé en ce que** les éléments de protection / d'identification (3) sont collés sur un ruban de support (29), moyennant quoi l'adhérence de la substance adhésive par rapport aux éléments de protection / d'identification (3) est supérieure à celle par rapport au ruban de support (29), de telle sorte que les éléments de protection / d'identification (3) se trouvant sur le bord d'application (10) du dispositif d'application (8) sont soulevés du ruban de support (29), et **en ce que** les éléments de protection / d'identification (3) sont appliqués sur la couche de couverture (22) revêtue de substance adhésive avec le côté non revêtu de substance adhésive.
